# EUROPÄISCHE PATENTSCHRIFT

(11) **EP 2 192 395 B1**
(45) Veröffentlichungstag und Bekanntmachung des Hinweises auf die Patenterteilung: **20.06.2012**
(21) Anmeldenummer: 08020695.6
(22) Anmeldetag: 28.11.2008
(51) Int. Cl.: G01L 5/00, G01M 5/00

(54) **Verfahren zum Prüfen der Zugbelastbarkeit eines in einer Wand oder Decke befestigten Ankers**
Method of checking the pulling load of an anchor fixed in a wall or ceiling
Procédé destiné à vérifier la résistance à la traction d'une ancre se trouvant dans un mur ou un plafond

(43) Veröffentlichungstag der Anmeldung: 02.06.2010
(73) Patentinhaber: Roch, Frank, 23611 Bad Schwartau (DE)
(72) Erfinder: Roch, Frank, 23611 Bad Schwartau (DE)
(74) Vertreter: Vollmann, Heiko

(56) Entgegenhaltungen:
- WO-A-02/099390
- DD-A5- 292 714
- DE-A1- 3 030 770
- DE-A1- 4 443 343

## Beschreibung

Die Erfindung betrifft ein Verfahren zum Prüfen der Zugbelastbarkeit eines in einer Wand oder Decke befestigten Ankers gemäß den im Oberbegriff des Anspruchs 1 angegebenen Merkmalen sowie eine Prüfvorrichtung zum Ausführen des Verfahrens gemäß Anspruch 7.

Die Standsicherheit von stehend im Boden verankerten Masten zu prüfen, zählt heutzutage in vielen Städten und Gemeinden zum regelmäßig praktizierten Stand der Technik. Die Prüfung der Standsicherheit bzw. der Festigkeit des Mastes erfolgt dabei typischerweise in Querrichtung, also in einer Belastungsrichtung wie sie typischerweise durch Windlast aufgebracht wird. Bei Oberleitungssystemen für Straßenbahnen, bei zwischen Häuserreihen abgespannten Beleuchtungsanlagen und der gleichen ist es üblich, Anker im Mauerwerk zu befestigen, an denen dann Drahtseile angebracht werden, an welchen die Beleuchtungsanlagen oder Fahrleitungen angebracht werden. Da diese Systeme schon aufgrund des Windes einer ständigen dynamischen Last ausgesetzt sind und es beim Versagen einer Verankerung zu schweren Folgeschäden kommen kann, ist es nicht nur aus Haftungsgründen zweckmäßig, insbesondere die Verankerung der Anker in der Wand oder ggf. auch in einer Decke in regelmäßigen zeitlichen Abständen zu überprüfen. Derartige Anker werden typischerweise auf Zug in ihrer Achsrichtung belastet, was besonders kritisch ist, da es ausschließlich auf den Verbund zwischen dem Mauerwerk und dem typischerweise aus Stahl bestehenden Anker ankommt. Ein Versagen der Verbindung tritt meist ohne Ankündigung spontan und vollständig auf.

Um dies zu vermeiden, müssen auch solche Anker regelmäßig überprüft werden, wobei sich bisherige Überprüfungen darauf beschränken, eine vergleichsweise hohe Zuglast aufzubringen, um dann die Haltbarkeit für eine in Betrieb zu erwartende wesentlich geringere Zugbelastung zu attestieren. Derartige Prüfsysteme sind aus DD 292 714 A5 und DE 30 30 770 A1 bekannt.

Es zählt zum praktizierten Stand der Technik, zum Prüfen der Verankerung des Ankers in der Wand auf diesen eine Zuglast aufzubringen. Eine solche Last wird typischerweise mit einer kranartigen Vorrichtung aufgebracht, und zwar nicht am Anker selbst, sondern an einem Abspannseil, das über den Anker gehalten wird, über das also auch sonst die Belastung auf den Anker aufgebracht wird. Mit diesem Verfahren könne jedoch keine reproduzierbaren und verlässlichen Messergebnisse erzielt werden, da systembedingt nicht nur die Verankerung des Ankers in der Wand sondern auch elastische und plastische Verformungen im Abspannseil und dessen Befestigungssystem miterfasst werden. Darüber hinaus kann auch nicht ausgeschlossen werden, dass sich die kranartige Vorrichtung mitbewegt oder am Boden verschiebt.

Aus WO 02/099390 A1 zählt es zum Stand der Technik, akustische Ereignisse zur Prüfung der Biegefestigkeit stehend verankerter Masten heranzuziehen. Das dort beschriebene Verfahren dient zum Prüfen von Holzmasten, wobei die erfassten Schallereignisse durch Bersten einzelner Fasern ausgelöst sind und zur Beurteilung der Biegefestigkeit des Mastes herangezogen werden.

Vor diesem Hintergrund liegt der Erfindung die Aufgabe zugrunde, ein gattungsgemäßes Prüfverfahren so auszubilden, dass die Zugbelastbarkeit des zu prüfenden Ankers in der Wand oder Decke mit möglichst hoher Genauigkeit mit technisch einfachen Mitteln ermittelt werden kann. Im Weiteren soll eine Prüfvorrichtung zur Durchführung des Verfahrens geschaffen werden.

Der verfahrensmäßige Teil dieser Aufgabe wird durch die in Anspruch 1 angegebenen Merkmale gelöst, eine Prüfvorrichtung zur Ausführung des Verfahrens ist in Anspruch 7 definiert. Vorteilhafte Ausgestaltungen der Erfindung sind in den Unteransprüchen, der nachfolgenden Beschreibung und der Zeichnung angegeben.

Das efindungsgemäße Verfahren zum Prüfen der Zugbelastbarkeit eines in einer Wand oder einer Decke befestigten Ankers bei welchem der Anker mittels einer Prüfvorrichtung mit einer Zugkraft quer zur Wand bzw. quer zur Decke belastet wird, ist gemäß der Erfindung dadurch gekennzeichnet, dass die Prüfvorrichtung an der Wand bzw. Decke abgestützt wird, eine mögliche Bewegung des Ankers in Bezug auf die Prüfvorrichtung erfasst wird und anhand der erfassten Bewegung eine bestimmte Zugbelastbarkeit festgestellt wird. Das erfindungsgemäße Verfahren misst somit eine etwaige Bewegung zwischen Anker und Prüfvorrichtung, was mit wenig Aufwand und vergleichsweise einfachen mechanischen, mechanoelektronischen oder elektronischen Wegaufnahmevorrichtungen erfolgen kann und äußere, das Messgerät beeinträchtigende Einflüsse weitgehend ausschaltet. Da die Prüfvorrichtung an der Wand bzw. an der Decke abgestützt ist, können auch nur geringste Bewegungen des Ankers in Bezug auf die Prüfvorrichtung erfasst und zur Bestimmung der Zugbelastbarkeit herangezogen werden. Dabei ist grundsätzlich davon auszugehen, dass bei der Ermittlung einer Bewegung des Ankers in Bezug auf die Wand bzw. die Decke die Prüfung typischerweise abgebrochen und die Verankerung als fehlerhaft festgestellt wird. Erfolgt hingegen keine Bewegung, so wird allenfalls eine elastische Verformung von Vorrichtung und/oder Anker ermittelt, die größenmäßig um mindestens eine Zehnerpotenz unter den vorgenannten Wegänderungen liegen. Es wird dann anhand der vom Anker ohne Bewegung ertragenen Zugbelastung eine vorher faktormäßig definierte und deutlich darunterliegende Zugbelastbarkeit festgestellt. Gemäß der Erfindung erfolgt während des Aufbringens der Zugbelastung auch eine akustische Erfassung und zwar vorzugsweise eine Körperschallerfassung von Anker und/oder Wand bzw. Decke. Die Zugbelastbarkeit wird dann zumindest auch unter Auswertung von Frequenz und/oder Amplitude der erfassten Schallwellen festgestellt.

Grundgedanke des erfindungsgemäßen Verfahrens ist es somit, etwaige Bewegungen des Ankers nach Möglichkeit unmittelbar am Anker, zumindest aber in seiner Nähe, nämlich im Bereich der Prüfvorrichtung zu erfassen, um auf diese Weise eine hohe Genauigkeit und Reproduzierbarkeit der Messung bei einfachem Messaufbau zu realisieren.

Gemäß einer vorteilhaften Weiterbildung des erfindungsgemäßen Verfahrens wird die Prüfvorrichtung selbsttragend mittels des Ankers an der Wand bzw. der Decke befestigt. Dabei wird typischerweise eine Vorspannkraft, also eine Vorlast aufgebracht, welche ausschließlich zur Befestigung der Prüfvorrichtung dient, dergestalt, dass die Prüfvorrichtung kraftschlüssig an der Wand bzw. Decke abgestützt ist. Diese Vorlast ist im Vergleich zur Prüflast vernachlässigbar, kann jedoch gegebenenfalls bei der Belastungsprüfung auch mit berücksichtigt werden. Die selbsttragende Befestigung der Prüfvorrichtung an der Wand hat den Vorteil, dass der apparative Aufwand zur Durchführung des Verfahrens denkbar gering ist, es kann also auf eine kranartige Sondermaschine oder dergleichen, wie dies beim Stand der Technik erforderlich ist, verzichtet werden. Zum Anbringen der Prüfvorrichtung an der Wand genügt häufig eine Leiter oder eine Hubbühne, die keinerlei besondere Anforderungen an Stabilität oder die Aufnahme von Kräften aufweisen müssen.

Vorteilhaft erfolgt das Prüfverfahren dergestalt, dass die Zugbelastung kontinuierlich ansteigend bis zu einer zuvor festgelegten maximalen Zugbelastung aufgebracht wird. Die kontinuierliche Lastaufbringung hat den Vorteil, dass vergleichsweise hohe Zugkräfte aufgebracht werden können, ohne dass eine erhöhte Gefahr des Versagens der Verankerung besteht. Da die aufgebrachte Zugbelastung typischerweise um ein vielfaches höher ist als die im normalen Betrieb zu erwartende Zugbelastung, ist es zweckmäßig, diese möglichst kontinuierlich ansteigend, also quasi statisch aufzubringen, da die dynamische Belastbarkeit bereits durch den eingerechneten Sicherheitsfaktor berücksichtigt ist.

Da bevorzugt der Körperschall aufgenommen wird, was schon sinnvoll ist, um den Umgebungsschall weitgehend auszuschalten, spielt es in der Regel keine Rolle, ob das Körperschallmikrofon am Anker oder an der Wand bzw. Decke angebracht wird oder in unmittelbarer Nähe dazu, beispielsweise an der Prüfvorrichtung, da etwaige Körperschallschwingungen, die aufgrund der Zugbelastung entstehen, sich quasi verlustfrei in die Wand bzw. die Prüfvorrichtung fortsetzen und somit auch dort erfassbar sind.

Typischerweise wird eine bestimmte Zugbelastbarkeit des Ankers festgestellt, wenn sich der Anker in Bezug auf die Prüfvorrichtung bei Belastung nicht bewegt. Unter "nicht bewegen" im Sinne der vorliegenden Erfindung ist zu verstehen, dass keine über elastische Verformungen des Systems (Prüfvorrichtung/Anker/Wand bzw. Decke) hinausgehende Bewegung erfolgt, also wenn sich der Anker in der Wand bzw. in der Decke aufgrund der Zugbelastung nicht bewegt. Eine solche Bewegung, auch wenn sie zum Stoppen kommt, signalisiert, dass der Verbund zwischen Anker und Wand bzw. Decke nicht bestimmungsgemäß, möglicherweise schadhaft oder gar aufgehoben ist.

Eine vorteilhafte Weiterbildung des Verfahrens ist gemäß der Erfindung dadurch vorgesehen, dass eine bestimmte Zugbelastbarkeit nur dann festgestellt wird, wenn sich der Anker in Bezug auf die Prüfvorrichtung bei Belastung nicht bewegt und darüber hinaus während der Belastung keine überlastungstypischen Schallwellen erfasst werden. Je nach Aufbau von Wand oder Decke können im Zuge der Belastung Schallereignisse auftreten, welche einen kritischen oder gar Überlastzustand signalisieren, ohne dass sich der Anker in der Wand bzw. der Decke bewegt. Es ist daher zweckmäßig, nicht nur die Bewegung des Ankers innerhalb der Wand bzw. der Decke zu erfassen, sondern darüber hinaus auch solche überlasttypischen Schallereignisse und eine bestimmte Zugbelastbarkeit nur dann festzustellen, wenn weder eine Bewegung noch solche Schallereignisse während der Belastung des Ankers ermittelt werden.

Die Ermittlung solcher überlasttypischen Schallereignisse kann typischerweise durch Erfassung der Schallwellen entweder anhand des Verlaufs der Amplitudenhöhe während der Belastung oder/bzw. gegebenenfalls auch zusätzlich anhand der Frequenz der aufgenommenen Schallwellen erfasst werden. Dabei hat sich gezeigt, dass bei einer Vielzahl von Verbundstoffen, welche den Anker in der Wand bzw. Decke aufnehmen, ein überlasttypisches Schallereignis ein kurzzeitiger Amplitudenanstieg ist, wobei die Amplitudenhöhe um ein Vielfaches größer als die sonstigen Amplituden der Schallauswertung während der Belastung ist.

Die erfindungsgemäße Prüfvorrichtung zum Ausführen des erfindungsgemäßen Verfahrens ist gekennzeichnet durch ein Traggestell, welches mindestens zwei Stützen zur Abstützung des Traggestells an einer Wand oder einer Decke zu zwei Seiten eines in der Wand bzw. in der Decke befestigten Ankers und mindestens einer Kupplung zum Befestigen eines Zugmittels an dem Anker aufweist. Dabei sind zwischen Kupplung und Traggestell Mittel zum Erzeugen der auf den Anker aufzubringenden Zugkraft vorgesehen. Traggestellseitig sind darüber hinaus Mittel zum Erfassen einer Bewegung zwischen Anker und Wand bzw. zwischen Anker und Decke vorgesehen. Des Weiteren weist die Prüfvorrichtung eine Steuer und Auswerteinheit auf, mit welcher das Aufbringen der Zugkraft gesteuert und die Mittel zum Erfassen der Bewegung ausgewertet werden. Gemäß der Erfindung ist ein Mikrofon vorgesehen, das vorzugsweise an einer Stütze, aber auch in anderen Bereichen des Traggestells befestigt sein kann.

Der Grundaufbau der erfindungsgemäßen Prüfvorrichtung ist denkbar einfach, es ist lediglich ein typischerweise aus Stahl, Aluminium oder anderen geeigneten Werkstoffen, (z. B. Verbundstoffen) aufgebautes Traggestell vorgesehen, das mindestens zwei Stützen aufweist, mit welchem das Traggestell an der Wand oder an der Decke selbsttragend abstützbar ist. Dabei sind die Stützen so anzuordnen, dass der zu prüfende Anker dazwischen angeordnet ist. Es ist weiterhin eine Kupplung vorgesehen, mit deren Hilfe ein Zugmittel am Anker befestigbar ist, wobei zwischen Kupplung und Traggestell Mittel zum Erzeugen der Zugkraft vorgesehen sind sowie im weiteren Mittel zum Erfassen einer etwaigen Bewegung zwischen Anker und Wand bzw. Decke vorgesehen sind. Diese Mittel zum Erfassen einer etwaigen Bewegung des Ankers in Bezug auf die Wand bzw. die Decke sind gemäß der Erfindung traggestellseitig angeordnet und erfassen die Bewegung somit nicht direkt aber unmittelbar indirekt über das Traggestell, dessen Eigenbewegung bei entsprechend kompakter und stabiler Bauform bei der hier in Rede stehenden Bewegungserfassung unberücksichtig bleiben kann, insbesondere die insoweit beim Aufbringen einer Zugkraft entstehenden elastischen Verformungen. Diese sind typischerweise mindestens eine Zehnerpotenz kleiner als die kleinste zu erwartende Bewegung des Ankers in Bezug auf die Wand bzw. die Decke im Überlastfall.

Grundsätzlich sind die Mittel zum Aufbringen der Zugkraft frei wählbar, auch kann über eine entsprechende Umlenkung im Stahlgestell die Zugkraft durch Aufbringen einer entgegengerichteten Druckkraft erzeugt werden. Besonders vorteilhaft und konstruktiv einfach wird jedoch die Zugkraft mittels eines typischerweise hydraulisch beaufschlagten Hubzylinders aufgebracht. Mit einem solchen Hubzylinder können kostengünstig vergleichsweise hohe Zugkräfte aufgebracht werden, vorausgesetzt, dass die entsprechende hydraulische Versorgung ausreichend dimensoniert ist.

Der besondere Vorteil liegt darin, dass lediglich der Hubzylinder innerhalb des Traggestells anzuordnen ist wohingegen die versorgende Hydraulik gegebenenfalls auch durch entsprechende Leitungsverbindungen mit größerem Abstand dazu angeordnet sein kann. Es kann also bei den typischen Anwendungen zur Prüfung von in der Wand verankerten Ankern eine kompakte und konstruktiv einfache Prüfvorrichtung mittels eines Krans oder einer Hubbühne angebracht werden, wobei die hydraulische Versorgung über Leitungsverbindungen räumlich getrennt verbleiben kann, ebenso gegebenenfalls die Steuer- und Auswerteinheit. Diese Einheit kann jedoch auch dem Traggestell zugeordnet sein, wie auch die hydraulische Versorgung, sofern dies zweckmäßig ist.

Eine besonders vorteilhafte Ausbildung der Prüfvorrichtung ergibt sich wenn die Stützen des Traggestells in ihrem Abstand zueinander einstellbar sind. Eine solche Anordnung hat den Vorteil, dass die Befestigung des Ankers gegebenenfalls zusammen mit der umgebenden Wand-oder Deckenstruktur geprüft werden kann oder auch nur die Befestigung des Ankers in der Wand bzw. Decke. Je geringer der Abstand zwischen Stützen und Anker ist, desto mehr wird ausschließlich die Verbindung Anker/Wand bzw. Anker/Decke geprüft. Wird hingegen der Abstand vergrößert, so wird auch zumindest ein Teil des umgebenden Wand-/Deckensystems mitgeprüft. Dies kann insbesondere sinnvoll sein, wenn sich im Mauerwerk beispielsweise schon kleine Risse zeigen um festzustellen, ob es sich hierbei zum Beispiel um übliche Setzrisse handelt oder ob diese durch die Belastung des Ankers hervorgerufen sind. Bei einer solchen Prüfung sind gegebenenfalls die zwischen Anker und Stützen liegenden Wand- bzw. Deckenbereiche bei Belastung auch einer optischen Prüfung zu unterziehen.

Die Mittel zum Erfassen einer Bewegung zwischen Anker und Wand bzw. zwischen Anker und Decke weisen vorteilhaft einen Wegaufnehmer vor, der am Traggestell angebracht, und zwar bevorzugt wand- bzw. deckennah an einer Stütze des Traggestells und dessen Fühler an den Anker anlegbar ist. Typischerweise ist hierzu ein Arm am Traggestell vorgesehen, an dessen Ende der Wegaufnehmer angeordnet ist. Dieser Arm sollte möglichst wand- oder deckennah an mindestens einer Stütze befestigt sein. Je näher die Anbringung in Bezug auf Wand oder Decke ist, je geringer ist der Einfluss des Traggestells auf die Messung.

Grundsätzlich kann bei ausreichend reproduzierbarer Ansteuerung ein bestimmter Zugkraftverlauf und somit auch eine zuvor festgesetzte maximale Zugbelastung auf den Anker aufgebracht werden, zum Beispiel mittels eines hydraulischen Hubzylinders und einer entsprechenden Ansteuerung der Versorgungshydraulik. Dabei kann beispielsweise eine Druckerfassung des hydraulischen Drucks genügen um mit ausreichender Genauigkeit auf die aufgebrachte Zugkraft schließen zu können. Besonders vorteilhaft ist jedoch eine gesonderte Kraftmessvorrichtung an der Vorrichtung vorgesehen, mit welcher die auf den Anker aufgebrachte Zugkraft erfasst werden kann. Besonders einfach und wirkungsvoll erfolgt dies in Form einer zwischen Kupplung und Hubzylinder angeordneten Kraftmessdose. Es kann jedoch auch eine andere Ausgestaltung gewählt werden, beispielsweise die Anbringung von Dehnungsmessstreifen an einem im Kraftfluss liegenden Stababschnitt. Eine solche Kraftmessvorrichtung erlaubt in Verbindung mit der entsprechend Auswerteinheit eine genaue Protokollierung des Messvorgangs, d. h. es kann nicht nur erfasst werden, ob eine zuvor festgelegte maximale Zugkraft auf den Anker aufgebracht worden ist, sondern auch welchen zeitlichen Verlauf der Zugkraftanstieg hat.

Zweckmäßigerweise handelt es sich bei dem Mikrofon um ein Körperschallmikrofon. Gemäß einer vorteilhaften Weiterbildung der Erfindung kann dieses Körperschallmikrofon auch unmittelbar am Anker oder an der Wand bzw. an der Decke zur Anlage gebracht werden, es ist dann zweckmäßigerweise über einen entsprechenden Arm mit dem Traggestell verbunden. Die unmittelbare Kontaktierung des Körperschallmikrofons mit dem Anker bzw. der Decke ermöglicht zudem eine weitgehend akustische Entkopplung vom Traggestell und darüber hinaus vom Umgebungsschall, wodurch die Auswertung der Schallereignisse im Bereich zwischen Anker und Wand/Decke vereinfacht werden.

Die Erfindung ist nachfolgend anhand eines in der Zeichnung dargestellten Ausführungsbeispiels näher erläutert. Es zeigen
- Fig. 1: in stark vereinfachter schematischer Darstellung eine an einer Wand angebrachte Prüfvorrichtung mit einem zu prüfenden in der Wand verankerten Anker in Seitenan- sicht,
- Fig. 2: die Prüfvorrichtung gemäß Fig. 1 in vergrößerter Darstellung,
- Fig. 3a: den zeitlichen Kraftverlauf bei einem Prüfvorgang,
- Fig. 3b: den zeitlichen Wegverlauf bei einem Prüfvorgang, in durchgezogener Linie bei einem zugbelastbaren Anker und in unterbrochene Linie bei einem versagenden Anker,
- Fig. 3c: ein Kraft-Weg-Diagramm eines Prüfvorgangs, in durchge- zogener Linie eines zugbelastbaren Ankers und in unter- brochener Linie eines versagenden Ankers,
- Fig. 4: den zeitlichen Amplitudenverlauf der bei einem Messvor- gang ermittelten Schallwellen mit einem überlasttypischen Schallereignis und
- Fig. 5: den Frequenzverlauf des Körperschalls bei einer Belas- tungsprüfung mit einem überlasttypischen Schallereignis.

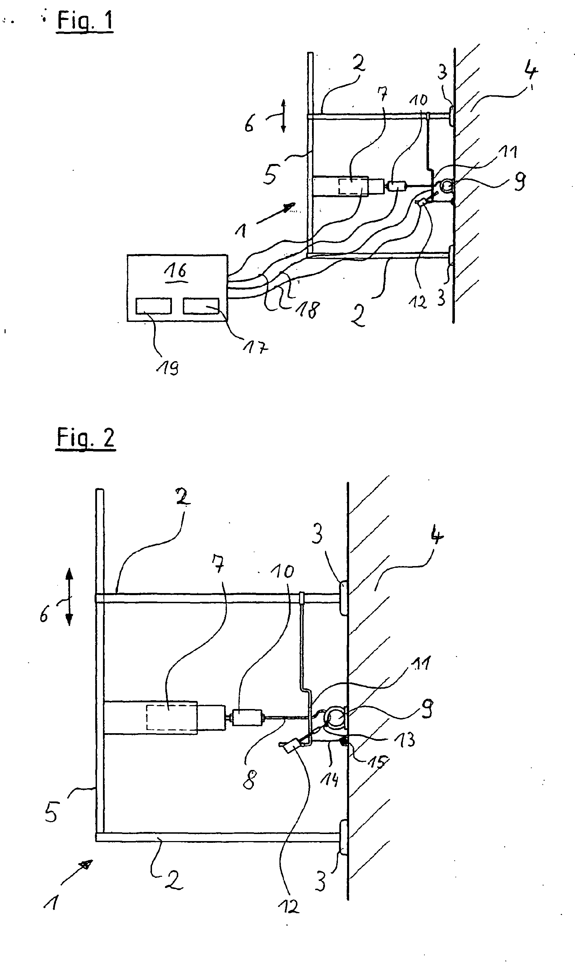

Die anhand der Figuren 1 und 2 dargestellte Prüfvorrichtung weist ein Traggestell 1 auf, welches zwei Stützen 2 beinhaltet, an deren Ende Stützfüße 3 angeordnet sind, die zum Abstützen des Traggestells an einer Wand 4 bzw. einer hier nicht dargestellten Decke vorgesehen und bestimmt sind. An den von den Stützenfüßen 3 abgewandten Enden der Stützen 2 ist ein Träger 5 vorgesehen, der an seinem in den Figuren unteren Enden fest mit dem einen Ende der unteren Stütze 2 verbunden ist. Die in den Figuren obere Stütze 2 hingegen ist, wie durch den Doppelpfeil 6 angedeutet, verstellbar am Träger 5 geführt, so dass der Abstand der Stützen 2 zueinander veränderbar ist. Der maximale Abstand wird durch die Länge des Trägers 5 bestimmt. Am Träger 5 ist im Bereich zwischen den Stützen 2 ein Hubzylinder 7 angeordnet, dessen Zylinderkörper am Träger 5 befestigt ist und dessen Kolbenteil zur Wand 4 weist. Der Hubzylinder 7 ist so ausgelegt, dass bei Druckbeaufschlagung der Kolben in den Zylinder einfährt und eine Zugkraft auf einen daran befestigten Haken 8 ausgeübt wird, welcher die Kupplung zwischen dem Hubzylinder 7 und somit dem Traggestell 1 und einem Anker 9 bildet, der in der Wand 4 verankert ist und dessen Verankerung zu überprüfen ist.

Im dargestellten Ausführungsbeispiel weist der Anker 9 eine ringförmige Öse auf, so dass ein Haken 8 als Kupplung dienen kann. Es versteht sich, dass bei anderer Form des Ankers auch die Kupplung entsprechend anders auszubilden ist. So ist beispielsweise bei Schraubenankern ein den Schraubenkopf hintergreifende Kupplung vorzusehen, bei Stabankern eine an den Stab angreifende Kupplung usw.

Zwischen dem hydraulisch betätigbaren Hubzylinder 7 und dem Haken 8 ist eine Kraftmessdose 10 angeordnet, mit der die mittels der Vorrichtung auf den Anker 9 aufgebrachte Zugkraft erfasst wird.

An der in den Figuren oberen Stütze 2 ist ein vertellbarer Arm 11 angebracht, der im Wesentlichen parallel zur Wand 4 mit geringem Abstand. dazu verläuft. Am Ende des Arms 11 ist ein Wegaufnehmer 12 angeordnet, der mittels nicht dargestellter Schnellversteller von Hand so ausgerichtet werden kann, dass sein Fühler 13 an den Anker 9 anliegt. Da sich der Arm 11 am Traggestell 1, insbesondere an der oberen Stütze 2 abstützt und diese wiederum sich unmittelbar dahinter mit ihrem Stützfuß 3 an der Wand 4 abstützt wird mittels des Wegaufnehmers 12 jegliche Bewegung des Ankers 9 in Bezug auf die Wand 4 erfasst. Lediglich die kurzen außerhalb liegenden Bereiche wie der Öse des Ankers und der Abschnitt der Stütze 2 zwischen Arm 11 und Wand 4 unterliegen elastischen Verformungen bei Zugbeanspruchung, diese sind jedoch im Vergleich zu etwaigen Bewegungen des Ankers 9 in Bezug auf die Wand 4 vernachlässigbar.

Weiterhin ist an dem Arm 11 mittels eines Zwischenarms 14 ein Körperschallmikrofon 15 angebracht, das gemäß Fig. 2 zur Anlage an die Wand 4 gebracht ist aber auch zur Anlage am Anker 9 vorgesehen sein kann. Das Mikrofon 15 kann auch an einer der Stützen 2 des Traggestells angelegt sein kann. Dieses Körperschollmikrofon 15 dient zur Aufnahme von Körperschall insbesondere von überlasttypischen Schallereignissen zwischen Anker 9 und Wand 4.

Das Körperschallmikrofon 15 kann auch über einen gesonderten Arm am Traggestell 1 angebracht sein und ist zweckmäßigerweise in Bezug auf die Wand 4 oder den Anker 9, an dem es zur Anlage gebracht wird federvorgespannt.

Räumlich unabhängig vom Traggestell 1 ist eine Steuer- und Auswerteinheit 16. Die Steuer- und Auswerteinheit 16 weist eine elektronische Auswerteinrichtung 17 auf, die mit den elektrischen Leitungen 18 von Kraftmessdose 10, Wegaufnehmer 12 und Körperschallmikrofon 15 verbunden ist. Die Steuer- und Auswerteinheit 16 weist darüber hinaus eine Steuereinrichtung 19 auf, die ein hydraulisches. Versorgungsaggregat zur Druckbeaufschlagung des Hubzylinders 7 beinhaltet. Mittels der Steuereinrichtung 19 kann vollautomatisch ein Prüfzyklus erfolgen, d. h. ein Druckbeaufschlagen des Hubzylinders 7 derart, dass mit diesem auf den Anker 9 eine bis zu einer zuvor festgelegten maximalen Belastung kontinuierlich ansteigende Zugkraft aufgebracht wird. Dabei dient zur Regelung des Zugkraftanstiegs das Ausgangssignal der Kraftmessdose 10, das auch innerhalb der Steuereinrichtung 19 zu Regelzwecken verarbeitet wird.

Die Auswerteinrichtung 17 weist in einfachster Form eine Kontrollleuchte oder einen akustischen Signalgeber auf, der eine bestimmte Zugbelastbarkeit des geprüften Ankers 9 signalisiert. In Weiterbildung kann hier auch eine elektronische Speichereinrichtung zur Speicherung der für die Prüfung relevanten Daten sowie ein Druckwerk zum Ausdruck der entsprechenden Prüfprotokolle und/oder Kurven vorgesehen sein.

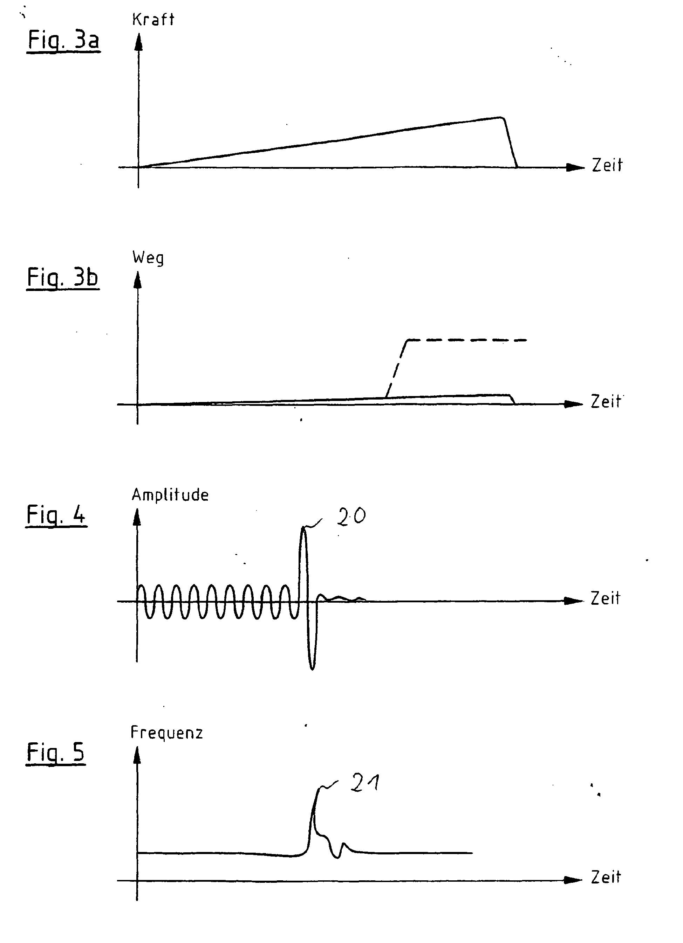

Die Auswertung erfolgt dabei grundsätzlich immer unter Zugrundelegung des vom Wegaufnehmer 12 ermittelten Ergebnisses. Während des Prüfvorgangs wird vom Hubzylinder 7 auf den Anker 9 eine kontinuierlich ansteigende Zugkraft bis zu einer Maximalkraft aufgebaut, wie dies anhand von Fig. 3a dargestellt ist. Nach Aufbau der Maximalkraft erfolgt binnen kurzer Zeit eine Entlastung. Wenn, wie in Fig. 3b in durchgezogener Linie dargestellt, der Wegaufnehmer 12 einen praktisch gegen Null gehenden und nach Entlastung auf Null zurückgehenden Weg erfasst, dann handelt es sich um elastische Verformungen innerhalb des Systems, der Anker 9 hat sich jedoch innerhalb der Wand 4 nicht bewegt.

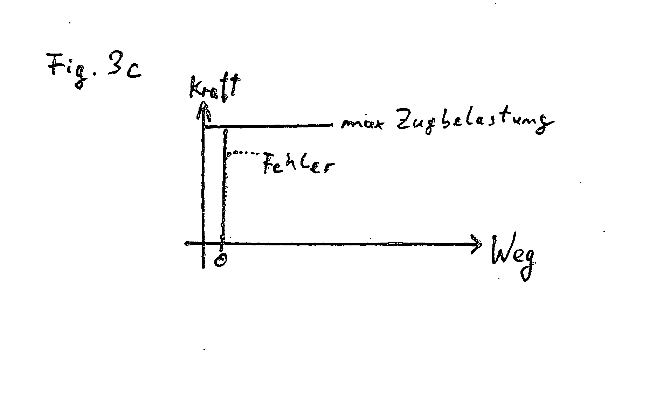

Ist der Verbund Anker/Wand hingegen gestört, so ergibt sich ein Wegverlauf wie in der unterbrochenen Linie in Fig. 3b dargestellt. Es tritt mehr oder wenig spontan eine Wegänderung auf, die auch bei Entlastung bleibt, d. h. nicht wie die elastische Verformung zurückgeht. Dann hat sich der Anker 9 in der Wand 4 ein Stück bewegt. Der Verbund zwischen Anker und Wand ist bei Ermittlung eines solchen Ergebnisses diefekt. Der Prüfvorgang ist zweckmäßigerweise unmittelbar nach Aufnahme dieser signifikanten Wegänderung abzubrechen und darüber hinaus der geprüfte Anker als fehlerhaft zu klassifizieren. Noch deutlicher zeigt sich dieser Effekt in der Darstellung gemäß Figur 3c, die zeitunabhängig die Kraft über dem Weg darstellt. Entsprechend zur Darstellung gemäß Figur 3b ist beim Kraftanstieg bis zur maximalen Zugbelastung bei einem zugbelastbaren Anker, wie er durch die durchgezogene Linie dargestellt ist, keine Wegänderung festzustellen, bei einem versagenden Anker hingegen, wie er durch die unterbrochene Linie dargestellt ist, tritt ab einer bestimmten Zugbelastung eine Wegänderung auf, die aufgrund einer Bewegung des Ankers in der Wand bzw. Decke erfolgt und somit kenntlich macht, dass die maximale Zugbelastung von diesem Anker nicht ertragen werden konnte sondern bereits zuvor der Verbund Mauerwerk Anker nachgegeben hat.

Je nach Art und Aufbau der Wand 4 kann jedoch die Wegmessung, wie sie anhand von Fig. 3b dargestellt ist, nicht immer die notwendige Genauigkeit für die festzustellende Zugbelastbarkeit geben, dann kann diese Messung unter Hinzuziehung der Körperschallmessung mittels des Mikrofons 15 ergänzt werden. Wenn über ein Belastungsprofil gemäß Fig. 3a sich die Amplitude des ermittelten Schalls und dessen Frequenz über den gesamten Zeitraum wenig ändern, dann kann davon ausgegangen werden, dass der Verbund Anker/Wand bestimmungsgemäß ist und eine bestimmte Zugbelastbarkeit festgestellt werden. Wenn jedoch bei Aufbringen der Zugkraft überlastungskritische Schallereignisse auftreten, wie dies beispielsweise die erhöhte Amplitude 20 in Fig. 4 verdeutlicht oder der plötzliche Frequenzanstieg 21 in Fig. 5, dann kann dies ein Indiz für eine zumindest beginnende Schadhaftigkeit der Verbindung sein, die als zusätzliches Prüfkriterium herangezogen werden kann um die Zugbelastbarkeit noch genauer bestimmen zu können.

### Bezugszeichenliste

- 1 -: Traggestell
- 2 -: Stützen
- 3 -: Stützfüße
- 4 -: Wand
- 5 -: Träger
- 6 -: Doppelpfeil
- 7 -: Hubzylinder
- 8 -: Haken
- 9 -: Anker
- 10 -: Kraftmessdose
- 11 -: Arm
- 12 -: Wegaufnehmer
- 13 -: Fühler
- 14 -: Zwischenarm
- 15 -: Körperschallmikrofon
- 16 -: Steuer- und Auswerteinheit
- 17 -: Auswerteinrichtung
- 18 -: elektrische Leitungen
- 19 -: Steuereinrichtung
- 20 -: erhöhte Amplitude
- 21 -: plötzlicher Frequenzanstieg

## Patentansprüche

1. Verfahren zum Prüfen der Zugbelastbarkeit eines in einer Wand (4) oder Decke befestigten Ankers (9), bei welchem der Anker (9) mittels einer Prüfvorrichtung (1) mit einer Zugkraft quer zur Wand (4) bzw. Decke belastet wird, eine mögliche Bewegung des Ankers (9) in Bezug auf die Prüfvorrichtung (1) erfasst wird und anhand der erfassten Bewegung eine bestimmte Zugbelastbarkeit festgestellt wird, wobei die Prüfvorrichtung (1) an der Wand (4) bzw. Decke abgestützt wird, **dadurch gekennzeichnet, dass** während des Aufbringens der Zugbelastung eine akustische Erfassung erfolgt und die Zugbelastbarkeit zumindest auch unter Auswertung von Frequenz und/oder Amplitude der erfassten Schallwellen erfolgt.

2. Verfahren nach Anspruch 1, **dadurch gekennzeichnet, dass** die Prüfvorrichtung (1) selbsttragend mittels des Ankers (9) an der Wand (4) bzw. Decke befestigt wird.

3. Verfahren nach einem der vorhergehenden Ansprüche, **dadurch gekennzeichnet, dass** die Zugbelastung kontinuierlich ansteigend bis zu einer zuvor festgelegten maximalen Zugbelastung aufgebracht wird.

4. Verfahren nach einem der vorhergehenden Ansprüche, **dadurch gekennzeichnet, dass** die akustische Erfassung in Form von Körperschallerfassung von Anker (9) und/oder Wand (4) bzw. Decke erfolgt.

5. Verfahren nach einem der vorhergehenden Ansprüche, **dadurch gekennzeichnet, dass** eine bestimmte Zugbelastbarkeit festgestellt wird, wenn sich der Anker (9) in Bezug auf die Prüfvorrichtung (1) bei Belastung nicht bewegt und keine überlastungstypischen Schallwellen (20, 21) erfasst werden.

6. Verfahren nach einem der vorhergehenden Ansprüche, **dadurch gekennzeichnet**, das überlastungstypische Schallwellen (20) anhand der Amplitudenhöhe ermittelt werden, wobei ein kurzzeitiger Amplitudenanstieg um ein vielfaches der sonstigen Amplituden als überlasttypisch ausgewertet wird.

7. Prüfvorrichtung zum Ausführen des Verfahrens nach einem der vorhergehenden Ansprüche, mit einem Traggestell (1), welches mindestens zwei Stützen (2) zur Abstützung des Traggestells (1) an einer Wand (4) oder Decke zu zwei Seiten eines in der Wand (4) bzw. Decke befestigten Ankers (9) und mindestens eine Kupplung (8) zum Befestigen eines Zugmittels an dem Anker (9) aufweist, wobei zwischen Kupplung (8) und Traggestell (1) Mittel (7) zum Erzeugen der Zugkraft vorgesehen sind und mit traggestellseitig vor gesehenen Mitteln (12) zum Erfassen einer Bewegung zwischen Anker (9) und Wand (4) bzw. Decke und mit einer Steuer- und Auswerteeinheit (16), **dadurch gekennzeichnet, dass** ein Mikrophon (15) vorgesehen ist.

8. Vorrichtung nach Anspruch 7, **dadurch gekennzeichnet, dass** zur Erzeugung der Zugkraft ein Hubzylinder (7) vorgesehen ist.

9. Vorrichtung nach Anspruch 7 oder 8, **dadurch gekennzeichnet, dass** der Abstand der Stützen (2) zueinander einstellbar ist.

10. Vorrichtung nach einem der Ansprüche 7 bis 9, **dadurch gekennzeichnet, dass** zur Erfassung einer Bewegung zwischen Anker (9) und Wand (4) bzw. Decke ein Wegaufnehmer (12) vorgesehen ist, der vorzugsweise wandnah bzw. deckennah an einer Stütze (2) angebracht ist und der an den Anker (9) anlegbar ist.

11. Vorrichtung nach einem der Ansprüche 7 bis 10, **dadurch gekennzeichnet, dass** eine Kraftmessvorrichtung (12) zur Erfassung der an den Anker (9) aufgebrachten Zugkraft vorgesehen ist, vorzugsweise in Form einer zwischen Kupplung (8) und Hubzylinder (7) angeordneten Kraftmessdose (10).

12. Vorrichtung nach einem der Ansprüche 7 bis 11, **dadurch gekennzeichnet, dass** das Mikrofon (15) an einer Stütze (2) befestigt ist.

13. Vorrichtung nach Anspruch 12, **dadurch gekennzeichnet, dass** das Mikrofon ein Körperschallmikrofon (15) ist, welches an den Anker 9) oder die Wand (4) bzw. Decke zur Anlage bringbar ist.

## Claims

1. A method for testing the tensile strength of an anchor (9) fastened in a wall (4) or ceiling, with which the anchor (9) by way of a testing device (1) is loaded with a tensile force transversely to the wall (4) or ceiling, a possible movement of the anchor (9) with respect to the testing device (1) is detected and a certain tensile strength is ascertained by way of the detected movement, wherein the testing device (1) is supported on the wall (4) or the ceiling, **characterised in that** during the application of the tensile load, an acoustic detection is effected and the tensile strength testing is effected at least also amid the evaluation of frequency and/or amplitude of the detected sound waves.

2. A method according to claim 1, **characterised in that** the testing device (1) is fastened on the wall (4) or ceiling in a self-supporting manner by way of the anchor (9).

3. A method according to one of the preceding claims, **characterised in that** the tensile load is applied in a continuously increasing manner up to a previously fixed, maximal tensile load.

4. A method according to one of the preceding claims, **characterised in that** the acoustic detection is effected in the form of structure-borne sound detection from the anchor (9) and/or wall (4) or ceiling.

5. A method according to one of the preceding claims, **characterised in that** a certain tensile strength is ascertained if the anchor (9) with respect to the testing device (1) does not move on loading and no overload-typical sound waves (20, 21) are detected.

6. A method according to one of the preceding claims, **characterised in that** overload-typical sound waves (20) are determined by way of the amplitude height, wherein a brief amplitude increase by a multiple of the other amplitudes is evaluated as being overload-typical.

7. A testing device for carrying out the method according to one of the preceding claims, with a support frame (1) which comprises at least two supports (2) for supporting the support frame (1) on a wall (4) or a ceiling at two sides of an anchor (9) fastened in the wall (4) or ceiling and at least one coupling (8) for fastening a tension means on the anchor (9), wherein means (7) for producing the tensile force are provided between the coupling (8) and the support frame (1) and with means (12) which are provided on the support frame side for detecting a movement between the anchor (9) and the wall (4) or ceiling and with a control and evaluation unit (16), **characterised in that** a microphone (15) is provided.

8. A device according to claim 7, **characterised in that** a displacement cylinder (7) is provided for producing the tensile force.

9. A device according to claim 7 or 8, **characterised in that** the distance of the supports (2) to one another can be set.

10. A device according to one of the claims 7 to 9, **characterised in that** a displacement sensor (12) is provided for detection of a movement between the anchor (9) and the wall (4) or ceiling, said displacement sensor being fastened on a support (2), preferably close to the wall or the ceiling and being able to be applied onto the anchor (9).

11. A device according to one of the claims 7 to 10, **characterised in that** a force measurement device (12) is provided for the detection of the tensile force which is applied onto the anchor (9), preferably in the form of a load cell (10) arranged between the coupling (8) and the displacement cylinder (7).

12. A device according to one of the claims 7 to 11, **characterised in that** the microphone (15) is fastened on a support (2).

13. A device according to claim 12, **characterised in that** the microphone is a structure-borne sound microphone (15) which can be brought to bear on the anchor (9) or the wall (4) or ceiling.

## Revendications

1. Procédé pour contrôler la capacité de charge de traction d'un organe d'ancrage (9) fixé dans un mur (4) ou dans un plafond, dans lequel l'organe d'ancrage (9) est chargé au moyen d'un appareil de contrôle (1) avec une force de traction transversalement au mur (4) ou au plafond, un éventuel déplacement de l'organe d'ancrage (9) par rapport à l'appareil de contrôle (1) est détecté et une certaine capacité de charge de traction est déterminée sur la base du déplacement détecté, l'appareil de contrôle (1) étant appuyé contre le mur (4) ou le plafond, **caractérisé en ce que**, pendant l'application de la charge de traction, il est effectué une détection acoustique et la capacité de charge de traction est aussi obtenue au moins avec analyse de la fréquence et/ou de l'amplitude des ondes sonores détectées.

2. Procédé selon la revendication 1, **caractérisé en ce que** l'appareil de contrôle (1) est fixé au mur (4) ou au plafond de façon autonome au moyen de l'organe d'ancrage (9).

3. Procédé selon l'une des revendications précédentes, **caractérisé en ce que** la charge de traction est appliquée de façon continuellement croissante jusqu'à une charge de traction maximale prédéterminée antérieurement.

4. Procédé selon l'une des revendications précédentes, **caractérisé en ce que** la détection acoustique s'effectue sous forme d'une détection du bruit de structure de l'organe d'ancrage (9) et/ou du mur (4) ou du plafond.

5. Procédé selon l'une des revendications précédentes, **caractérisé en ce qu'**une certaine capacité de charge de traction est déterminée lorsque l'organe d'ancrage (9) ne se déplace pas par rapport à l'appareil de contrôle (1) et qu'aucune onde acoustique (20, 21) typique d'une surcharge n'est détectée.

6. Procédé selon l'une des revendications précédentes, **caractérisé en ce que** des ondes sonores (20) typiques d'une surcharge sont déterminées d'après la hauteur de l'amplitude, une brève élévation de l'amplitude de plusieurs fois les autres amplitudes étant interprétée comme typique d'une surcharge.

7. Appareil de contrôle pour la mise en oeuvre du procédé selon l'une des revendications précédentes, comprenant un bâti support (1) qui comporte au moins deux montants (2) servant à appuyer le bâti support (1) contre un mur (4) ou un plafond, de part et d'autre d'un organe d'ancrage (9) fixé au mur (4) ou au plafond, et au moins un accouplement (8) servant à fixer un moyen de traction à l'organe d'ancrage (9), des moyens (7) étant prévus entre l'accouplement (8) et le bâti support (1) pour produire la force de traction, et comprenant aussi des moyens (12) prévus côté bâti porteur, pour détecter un déplacement entre l'organe d'ancrage (9) et le mur (4) ou le plafond, et une unité de commande et d'analyse (16), **caractérisé en ce qu'**il est prévu un microphone (15).

8. Appareil selon la revendication 7, **caractérisé en ce qu'**un vérin (7) est prévu pour produire la force de traction.

9. Appareil selon la revendication 7 ou 8, **caractérisé en ce que** l'écartement mutuel des montants (2) est réglable.

10. Appareil selon l'une des revendications 7 à 9, **caractérisé en ce qu'**il est prévu pour la détection d'un déplacement entre l'organe d'ancrage (9) et le mur (4) ou le plafond, un capteur de déplacement (12) qui est fixé à un montant (2), de préférence à proximité du mur ou du plafond et qui peut être appliqué à l'organe d'ancrage (9).

11. Appareil selon l'une des revendications 7 à 10, **caractérisé en ce qu'**il est prévu un appareil dynamométrique (12) servant à détecter la force de traction appliquée à l'organe d'ancrage (9), de préférence réalisé sous la forme d'une capsule dynamométrique (10) disposée entre l'accouplement (8) et le vérin (7).

12. Appareil selon l'une des revendications 7 à 11, **caractérisé en ce que** le microphone (15) est fixé à un montant (2).

13. Appareil selon la revendication 12, **caractérisé en ce que** le microphone est un microphone pour bruits de structure (15), qui peut être monté sur l'organe d'ancrage (9) ou sur le mur (4) ou le plafond.
